# EUROPÄISCHE PATENTSCHRIFT

(11) **EP 1 760 854 B1**
(45) Veröffentlichungstag und Bekanntmachung des Hinweises auf die Patenterteilung: **24.11.2010**
(21) Anmeldenummer: 05405514.0
(22) Anmeldetag: 01.09.2005
(51) Int. Cl.: H02G 3/22

(54) **Kabeldurchführung**
Cable feedthrough
Traversée de câble

(43) Veröffentlichungstag der Anmeldung: 07.03.2007
(73) Patentinhaber: Optosys SA, 1762 Givisiez (CH)
(72) Erfinder: Heimlicher, Peter, 1700 Fribourg (CH); Charrière, Fabrice, 1636 Broc (CH)
(74) Vertreter: AMMANN PATENTANWÄLTE AG BERN

(56) Entgegenhaltungen:
- DE-A1- 1 640 968
- GB-A- 1 526 766

## Beschreibung

Die Erfindung betrifft eine Kabeldurchführung gemäss einem der Ansprüche 1 bis 9 und einen damit ausgestatteten, gekapselten Sensor.

Zur dichten Durchführung eines Kabels durch eine Wandung ist es bekannt, das Kabel durch eine Buchse zu führen und einen Dichtring zwischen der Buchse und einer koaxial dazu angeordneten Brille einzuklemmen, so dass seine radial innere Fläche gegen das Kabel gedrückt wird. Bei der in der Schweizer Patentschrift CH480747 offenbarten Kabeldurchführung ist die Brille als Bodenpartie einer auf die Buchse aufgeschraubten Überwurfmutter ausgebildet und die Kompression des Dichtrings erfolgt durch das Anziehen dieser Überwurfmutter.

Bei Kabeldurchführungen dieser Art ist die Dichtigkeit nur gewährleistet, wenn die Überwurfmutter ausreichend angezogen ist. Einer montierten Kabeldurchführung ist nicht anzusehen ob dies der Fall ist oder nicht, so dass Montagefehler schwer zu erkennen sind. Es ist auch nicht auszuschliessen, dass eine Überwurfmutter durch unsachgemässe Manipulationen gelöst und so die Dichtigkeit der Kabeldurchführung beeinträchtigt wird.

Eine Aufgabe der Erfindung besteht darin, diesen Nachteil zu vermeiden und eine Kabeldurchführung zu schaffen, die einfach montierbar ist und dauerhaft eine zuverlässige Abdichtung gewährleistet.

Diese Aufgabe wird durch eine Kabeldurchführung mit den Merkmalen von Anspruch 1 gelöst. Bevorzugte Ausführungsformen sind in den abhängigen Ansprüchen angegeben.

Die Erfindung wird im Folgenden anhand von Ausführungsbeispielen unter Bezugnahme auf die Figuren näher erläutert.
Figur 1 zeigt in schematischer Darstellung den Längsschnitt einer Kabeldurchführung in ihrem montierten Zustand;
Figur 2 zeigt die axiale Ansicht der Kabeldurchführung gemäss Figur 1;
Die Figuren 3 und 4 zeigen den Figuren 1 und 2 entsprechende Darstellungen derselben Kabeldurchführung im Zustand vor der Montage;
Die Figuren 5 und 6 zeigen den Figuren 1 und 2 entsprechende Darstellungen derselben Kabeldurchführung während der Montage;
Die Figuren 7 und 8 zeigen eine alternative Ausführungsform der Kabeldurchführung in Ansichten entsprechend den Figuren 1 und 2; und
Figur 9 zeigt einen gekapselten induktiven Näherungssensor mit einem Gehäuse und einem durch eine Kabeldurchführung in dieses geführten Anschlusskabel.

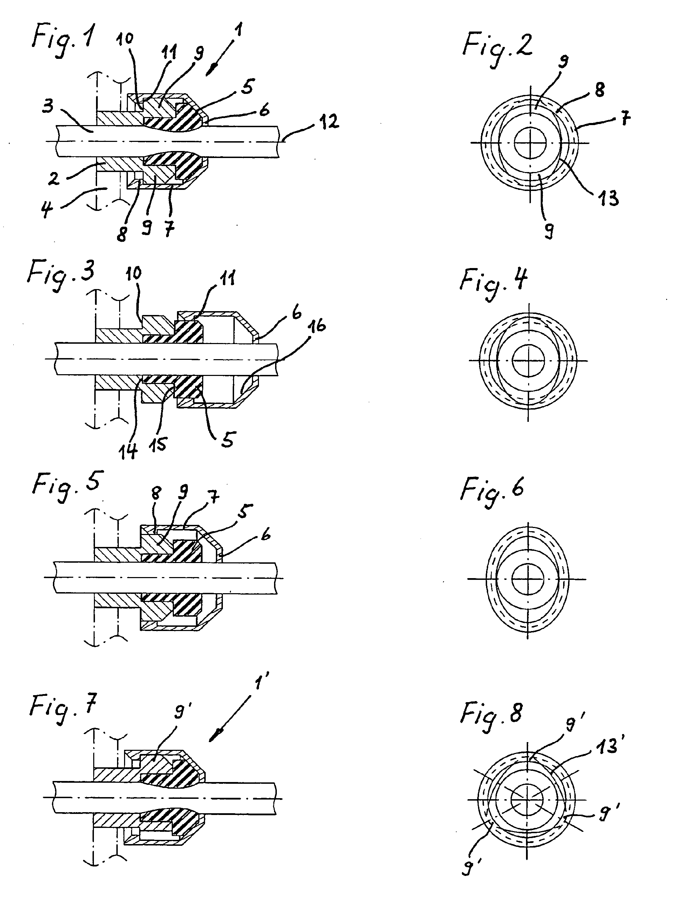

In den Figuren 1 und 2 ist schematisch eine Kabeldurchführung 1 in ihrem montierten Zustand dargestellt. Sie beinhaltet eine Buchse 2, durch deren Bohrung ein Kabel 3 mit kreisförmigem Querschnitt hindurchgeführt ist. Die Buchse 2 ist in eine mit strichpunktierten Linien angedeutete Wandung 4 eingesetzt, so dass die Bohrung der Buchse 2 und somit auch das Kabel 3 diese Wandung 4 durchquert. Alternativ dazu könnte die Buchse 2 auch einstückig mit der Wandung 4 verbunden sein.

Zur Abdichtung des Kabels 3 gegenüber der Buchse 2 beinhaltet die Kabeldurchführung 1 im Weiteren einen elastischen Dichtring 5, dessen Innendurchmesser im Wesentlichen dem Durchmesser des Kabels 3 entspricht und der in diesem montierten Zustand stirnseitig an die Buchse 2 anliegt, sowie eine gegenüber der Buchse am Dichtring anliegende Brille 6, die durch Verbindungsmittel in einem axialen Abstand zur Buchse gehalten, bei dem der Dichtring zwischen der Brille und der Buchse eingespannt ist. Die radial innere Fläche des Dichtrings wird dadurch gegen das Kabel gepresst.

Die Verbindungsmittel beinhalten einen umlaufenden Mantel 7, der sich vom äusseren Rand der Brille 6 in Richtung der Buchse 2 erstreckt und an dessen Innenseite ein umlaufender Vorsprung 8 vorgesehen ist, sowie dazu korrespondierende, an der Aussenseite der Buchse 2 vorgesehene Nocken 9, die der genannte Vorsprung 8 im montierten Zustand hintergreift. Die Brille 6 und der daran anschliessende Mantel 7 bilden zusammen einen Käfig, in dem der Dichtring 5 gehalten ist.

In den Figuren 3 und 4 ist die Kabeldurchführung in einem Zustand vor ihrer Montage dargestellt und die Figuren 5 und 6 zeigen dieselbe Kabeldurchführung während der Montage. Die Montage erfolgt durch das Zusammenpressen der Buchse 2 und der Brille 6 in axialer Richtung, wobei der Vorsprung 8 unter elastischer Verformung des Mantels 7 über die Nocken 9 der Buchse gleitet (Siehe die Figuren 5 und 6). Sobald der Vorsprung 8 die Nocken 9 überwunden hat nimmt der Mantel wieder seine ursprüngliche Form an, so dass der Vorsprung hinter den Nocken einrastet.

Die in diesem montierten Zustand aneinander liegenden Sperrflächen 10, 11 der Nocken 9 und des umlaufenden Vorsprungs 8 liegen vorzugsweise in einer zur Achse 12 senkrechten Ebene oder sie sind gegenüber dieser Ebene sogar leicht hinterschnitten, so dass der Mantel auch mit erheblichem Kraftaufwand nicht mehr von der Buchse abziehbar ist. Für ein späteres Lösen der Verbindung ohne Beschädigung des Mantels 7 sind keine Hilfsmittel vorgesehen und die Verbindung ist daher im hier verstandenen Sinne unlösbar.

Diese Schnappverbindung zwischen Brille 6 und Buchse 2 hat gegenüber einer Schraubverbindung den Vorteil, dass die Vorspannung des Dichtrings 5 durch die Positionen der korrespondierenden Verbindungselemente vorgegeben ist, so dass z.B. eine durch ungenügendes Anziehen einer Verschraubung verursachte Undichtheit ausgeschlossen ist. Die Schnappverbindung ist unlösbar, so dass auch Manipulationen an der montierten Kabeldurchführung 1 ausgeschlossen sind. Sowohl der Mantel 7 als auch die Brille 6 können mit glatten Aussenflächen hergestellt werden, da das Ansetzen eines Drehwerkzeugs ermöglichende Strukturen wie insbesondere parallele Flächen zum Ansetzen eines Gabelschlüssels nicht benötigt werden. Dies hat den zusätzlichen Vorteil, dass der Mantel 7 besonders dünnwandig sein kann. Schliesslich sind die Komponenten der Schnappverbindung einfach herstellbar und sie ermöglichen eine schnelle und sichere Montage der Kabeldurchführung 1.

Im Buchsenquerschnitt betrachtet sind die Nocken 9 abgerundet, damit die mit der Montage verbundene Verformung des Mantels 7 möglichst schonend erfolgt und insbesondere seine Elastizitätsgrenze nicht überschritten wird. Die über die Nockenspitzen verlaufende Umfangslinie 13 der Buchse, welche in der in Figur 2 dargestellten, axialen Ansicht der Kontur der Buchse entspricht, hat vorzugsweise die Form eines regelmässigen konvexen Polygons mit abgerundeten Ecken. Dies gilt auch für eine Buchse 2 mit nur zwei Nocken 9: ein Polygon mit zwei Ecken entspricht im hier verstandenen Sinne der Kontur der Schnittfläche von zwei gleich grossen Kreisen.

Die Rundungen benachbarter Nocken 9 grenzen vorzugsweise tangential aneinander, so dass die Umfangslinie 13 überall rund ist. Im Beispiel gemäss den Figuren 1 und 2 weist die Buchse zwei in einander gegenüberliegenden Positionen angeordnete Nocken auf, die derart abgerundet sind, dass die genannte Umfangslinie 13 die Form einer Ellipse aufweist.

Die Länge der über die Nockenspitzen verlaufenden Umfangslinie ist vorzugsweise nicht grösser als der innere Umfang des an der Mantelinnenseite umlaufenden Vorsprungs 8, so dass der Mantel 7 während der Montage nicht gedehnt wird.

Der Mantel 7 besteht aus einem Material, das für die Montage ausreichend elastisch verformbar ist. Geeignete Materialien sind zum Beispiel Stahl, Aluminium oder technische Kunststoffe. Dieselben Materialien können, in beliebiger Kombination, auch für die Buchse 2 und die Brille 6 verwendet werden. Die Brille 6 und der Mantel 7 werden bevorzugt an einem Stück aus demselben Material gefertigt.

Der Dichtring 5 weist eine in die Buchse eingeschobene und an einer inneren Stirnfläche 14 derselben anliegende, erste Partie und eine daran anschliessende, an einer äusseren Stirnfläche 15 der Buchse anliegende zweite Partie auf. Diese zweite Partie des Dichtrings liegt ausserhalb der Buchse und wird im montierten Zustand durch eine konische Anpressfläche 16 der Brille 6 radial einwärts, gegen das Kabel 6 gedrückt.

Die Figuren 7 und 8 zeigen schematisch eine montierte Kabeldurchführung 1', die sich von der in den Figuren 1 und 2 dargestellten Variante dadurch unterscheidet, dass nicht zwei sondern drei regelmässig über den Umfang der Buchse verteilt angeordnete Nocken 9' vorgesehen sind. Die in Figur 8 sichtbare, über die Nockenspitzen verlaufende Umfangslinie 13' der Buchse hat die Form eines regelmässigen Dreiecks mit abgerundeten Ecken. Die Ecken sind derart abgerundet, dass die genannte Umfangslinie 13' die Form eines Releaux-Dreiecks mit abgerundeten Ecken aufweist.

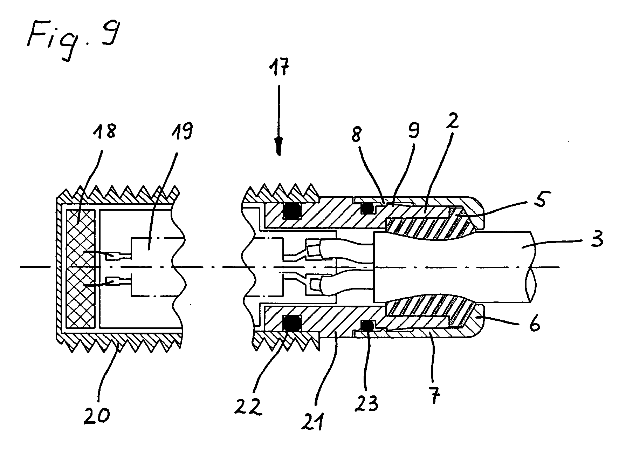

Figur 9 zeigt einen gekapselten Sensor mit einem rohrförmigen Gehäuse 17, dessen eine Endpartie die Buchse 2 einer Kabeldurchführung der zu den Figuren 1 bis 6 beschriebenen Art bildet, durch die ein Anschlusskabel 3 in das Gehäuse geführt ist. Es handelt sich um einen induktiven Näherungssensor mit einer an einem Ende des Gehäuses angeordneten Messspule 18, die über eine Messschaltung 19 mit dem Anschlusskabel 3 verbunden ist.

Das Gehäuse 17 besteht aus einer einseitig verschlossenen, ersten Hülse 20, in der die Messspule 18 angeordnet ist und die zur Montage des Sensors mit einem Aussengewinde versehen ist, und einer dazu korrespondierenden zweiten Hülse 21, deren eine Endpartie in das offene Ende der ersten Hülse 20 eingesetzt und mittels eines O-Rings 23 gegenüber dieser abgedichtet ist und deren zweite Endpartie die Buchse 2 der Kabeldurchführung bildet. Der maximale Aussendurchmesser der Kabeldurchführung, hier der Durchmesser des Mantels, ist kleiner als der Aussendurchmesser der ersten Hülse 20 und vorzugsweise auch kleiner als der Kerndurchmesser von deren Gewinde, so dass der Sensor mit dem Kabel voran in eine zur Befestigung der ersten Hülse 20 vorgesehene Montagebohrung einführbar ist.

Die Brille 6 und der an diese anschliessende, zylindrische Mantel 7 mit dem innenseitig umlaufenden Vorsprung 8 sind in einem Stück vorzugsweise aus Stahl, Aluminium oder einem technischen Kunststoff hergestellt. Der Vorsprung 8 ist hinter zwei dazu korrespondierenden, in einander gegenüberliegenden Positionen an der Aussenseite der Buchse 2 vorgesehenen Nocken 9 eingerastet. Diese Nocken 9 sind so geformt, dass die über die Nockenspitzen verlaufende Umfangslinie 13 - wie aus Figur 2 ersichtlich - die Form einer Ellipse aufweist.

Der Dichtring 5 weist, ebenfalls den Figuren 1 und 2 entsprechend, eine bis auf eine innere Stirnfläche der Buchse in diese eingeschobene erste Partie und eine an einer äusseren Stirnfläche der Buchse anliegende zweite Partie auf. Der Spalt zwischen der Aussenfläche der Buchse und der Innenfläche des Mantels ist hinter den Nocken 9 und dem zu diesen korrespondierenden Vorsprung 8 des Mantels durch einen O-Ring 23 abgedichtet. Dieser stabilisiert zugleich in radialer Richtung die Lage des Mantels 7 in Bezug auf die Buchse 2, was insbesondere dann nützlich ist, wenn für deren axiale Verbindung lediglich zwei Nocken 9 vorgesehen sind.

Die die Buchse 2 bildende Endpartie der zweiten Hülse 21 ist dünner als eine Mittelpartie derselben, deren Durchmesser gleich dem Aussendurchmesser des Mantels 7 ist.

In Abwandlung der vorstehend beschriebenen, konkreten Ausführungsbeispiele könnte die Buchse an Stelle der zylindrischen Innenfläche auch eine sich in Richtung der Brille konisch öffnende Innenfläche aufweisen, an der eine in die Buchse eingeführte Partie des Dichtrings anliegt. Auf die in den Figuren gezeigte, innere Stirnfläche 14 der Buchse könnte in diesem Fall verzichtet werden.

## Patentansprüche

1. Kabeldurchführung (1) mit einer Buchse (2) zur Durchführung eines Kabels (3) durch dieselbe, einem stirnseitig an die Buchse (2) anlegbaren, elastischen Dichtring (5), dessen Innendurchmesser im Wesentlichen dem Durchmesser des Kabels (3) entspricht, und einer gegenüber der Buchse (2) an den Dichtring (5) anlegbaren Brille (6), welche in einem montierten Zustand durch Verbindungsmittel (7, 8, 9) in einem axialen Abstand zur Buchse (2) gehalten wird, bei dem der Dichtring (5) zwischen der Brille (6) und der Buchse (2) eingespannt ist, so dass seine radial innere Fläche gegen das Kabel (3) gepresst wird, **dadurch gekennzeichnet, dass**
die Verbindungsmittel eine zur Montage der Kabeldurchführung durch axiales Zusammenpressen von Brille (6) und Buchse (2) schliessbare Schnappverbindung bilden, welche die Brille (6) und die Buchse (2) in ihrem geschlossenen Zustand unlösbar miteinander verbindet.

2. Kabeldurchführung nach Anspruch 1, **dadurch gekennzeichnet, dass** sich vom äusseren Rand der Brille (6) ein umlaufender Mantel (7) erstreckt, an dessen Innenseite mindestens ein vorstehendes Verbindungselement (8) vorgesehen ist, das durch das Zusammenpressen von Buchse (2) und Brille (6) unter elastischer Verformung des Mantels (7) über mindestens ein dazu korrespondierendes Verbindungselement (9) an der Aussenfläche der Buchse (2) schiebbar und hinter diesem einrastbar ist.

3. Kabeldurchführung nach Anspruch 2, **dadurch gekennzeichnet, dass** die Buchse (2) über ihren Umfang verteilt angeordnete, radial abstehende Nocken (9) aufweist und an der Innenseite des Mantels (7) ein dazu korrespondierender, umlaufender Vorsprung (8) vorgesehen ist, der durch das Zusammenpressen von Buchse (2) und Brille (6) unter elastischer Verformung des Mantels (7) über die Nocken (9) schiebbar und hinter diesen einrastbar ist.

4. Kabeldurchführung nach Anspruch 3, **dadurch gekennzeichnet, dass** die Nocken (9) regelmässig über den Umfang der Buchse (2) verteilt angeordnet sind und eine über die Nockenspitzen verlaufende Umfangslinie (13) der Buchse die Form eines regelmässigen konvexen Polygons mit abgerundeten Ecken aufweist.

5. Kabeldurchführung nach Anspruch 4, **dadurch gekennzeichnet, dass** die Länge der Umfangslinie (13) nicht grösser als der innere Umfang des Vorsprungs (8) an der Innenfläche des Mantels (7) und vorzugsweise gleich diesem inneren Umfang ist.

6. Kabeldurchführung gemäss einem der Ansprüche 4 oder 5, **dadurch gekennzeichnet, dass** das Polygon zweieckig ist und die Umfangslinie (13) vorzugsweise die Form einer Ellipse aufweist.

7. Kabeldurchführung gemäss einem der Ansprüche 4 oder 5, **dadurch gekennzeichnet, dass** das Polygon dreieckig ist und die Umfangslinie (13') vorzugsweise die Form eines Releaux-Dreiecks mit abgerundeten Ecken aufweist.

8. Kabeldurchführung nach einem der Ansprüche 1 bis 7, **dadurch gekennzeichnet, dass** der Dichtring eine in die Buchse (2) einschiebbare erste Partie und eine daran anschliessende, im montierten Zustand an einer äusseren Stirnfläche (15) der Buchse (2) anliegende zweite Partie aufweist.

9. Kabeldurchführung nach einem der Ansprüche 1 bis 8, **dadurch gekennzeichnet, dass** die Brille (6) eine konische Anpressfläche (16) aufweist, welche den Dichtring (5) im montierten Zustand radial einwärts drückt.

10. Gekapselter Sensor, insbesondere ein induktiver Näherungssensor, mit einem rohrförmigen Gehäuse, dessen eine Endpartie die Buchse (2) einer Kabeldurchführung nach einem der Ansprüche 1 bis 9 bildet, durch die ein Anschlusskabel (3) in das Gehäuse geführt ist.

11. Gekapselter Sensor nach Anspruch 10, **dadurch gekennzeichnet, dass** das Gehäuse eine einseitig verschlossene erste Hülse (20) beinhaltet, die zur Montage des Sensors mit einem Aussengewinde versehen ist, sowie eine dazu korrespondierende zweite Hülse (21), deren eine Endpartie dicht in das offene Ende der ersten Hülse (20) eingesetzt ist und deren zweite Endpartie die Buchse (2) der Kabeldurchführung bildet, wobei der maximale Aussendurchmesser dieser Kabeldurchführung kleiner als der Aussendurchmesser und bevorzugt kleiner als der Kerndurchmesser des Aussengewindes der ersten Hülse (20) ist, so dass der Sensor mit dem Kabel (3) voran in eine Montagebohrung einführbar ist.

## Claims

1. Cable gland (1) comprising a gland body (2) for feeding a cable (3) therethrough, an elastic sealing ring (5) that is applicable to the front side of the gland body (2) and whose internal diameter essentially corresponds to the diameter of the cable (3), and a gland ring (6) that is applicable to the sealing ring (5) on the opposite side of the gland body (2) and is maintained by connecting means (7, 8, 9) in an assembled condition at such an axial distance from the gland body (2) that the sealing ring (5) is clamped between the gland ring (6) and the gland body (2) so that its radially inner surface is pressed against the cable (3),
**characterized in that**
the connecting means form a snap-on connection that is closable for the assembly of the cable gland by axially pushing together the gland ring (6) and the gland body (2) and that connects the gland ring (6) and the gland body (2) undetachably in their closed condition.

2. Cable gland according to claim 1, **characterized in that** a circular jacket (7) extends from the outer edge of the gland ring (6) that is provided with at least one projecting connecting element (8) on its inner side which, by pressing the gland body (2) and the gland ring (6) together, is slidable over at least one corresponding connecting element (9) on the outside of the gland body (2) while the jacket (7) is elastically deformed and capable of being engaged behind the same.

3. Cable gland according to claim 2, **characterized in that** the gland body (2) comprises radially projecting cams (9) that are distributed around its circumference and a corresponding circular projection (8) is provided on the inner side of the jacket (7) which, by pressing the gland body (2) and the gland ring (6) together, is slidable over the cams (9) while the jacket (7) is elastically deformed and capable of being engaged behind the same.

4. Cable gland according to claim 3, **characterized in that** the cams (9) are regularly distributed around the circumference of the gland body (2) and a circumferential line (13) of the gland body that runs over the cam apexes has the form of a regular convex polygon with rounded edges.

5. Cable gland according to claim 4, **characterized in that** the length of the circumferential line (13) is not greater than the inner circumference of the projection (8) on the inner surface of the jacket (7) and preferably equal to this inner circumference.

6. Cable gland according to one of claims 4 or 5, **characterized in that** the polygon is biangular and the circumferential line (13) preferably has the form of an ellipse.

7. Cable gland according to one of claims 4 or 5, **characterized in that** the polygon is triangular and the circumferential line (13') preferably has the form of a Reuleaux triangle with rounded edges.

8. Cable gland according to one of claims 1 to 7, **characterized in that** the sealing ring comprises a first portion that is insertable into the gland body (2) and a following second portion that abuts to an outer front surface (15) of the gland body (2) in the assembled condition.

9. Cable gland according to one of claims 1 to 8, **characterized in that** the gland ring (6) comprises a conical clamping surface (16) that presses the sealing ring (5) radially inwards in the assembled condition.

10. Encapsulated sensor, more particularly an inductive proximity sensor, comprising a tubular enclosure one end portion of which forms the gland body (2) of a cable gland according to one of claims 1 to 9 through which a connecting cable (3) is guided into the enclosure.

11. Encapsulated sensor according to claim 10, **characterized in that** the enclosure includes a first sleeve (20) that is closed on one side and is provided with an external thread for mounting the sensor, as well as a corresponding second sleeve (21) one end portion of which is tightly inserted in the open end of the first sleeve (20) and whose second end portion forms the gland body (2) of the cable gland, the maximum external diameter of this cable gland being smaller than the external diameter and preferably smaller than the core diameter of the external thread of the first sleeve (20) such that the sensor is insertable into a mounting bore with the cable (3) first.

## Revendications

1. Presse-étoupe (1) comprenant un manchon (2) pour le passage d'un câble (3) par celui-ci, une bague d'étanchéité (5) élastique venant s'appuyer sur le côté frontal du manchon (2) et dont le diamètre intérieur correspond essentiellement au diamètre du câble (3), et une lunette (6) venant s'appuyer sur la bague d'étanchéité (5) du côté opposé au manchon (2), laquelle est tenue dans un état monté par des moyens de connexion (7, 8, 9) à un écart axial du manchon (2) où la bague d'étanchéité (5) est serrée entre la lunette (6) et le manchon (2), de sorte que sa surface radialement intérieure est pressée contre le câble (3),
**caractérisé en ce que**
les moyens de connexion forment une connexion encliquetable pouvant être fermée par compression axiale de la lunette (6) et du manchon (2) pour le montage du presse-étoupe, et qui relient de manière indétachable l'écrou (6) et le manchon (2) dans leur état fermé.

2. Presse-étoupe selon la revendication 1, **caractérisé en ce que** du bord extérieur de la lunette (6) s'étend une enveloppe (7) circulaire sur le côté intérieur de laquelle est pourvu au moins un élément de connexion (8) en saillie lequel, par compression du manchon (2) et de la lunette (6) peut être glissé sous déformation élastique de l'enveloppe (7), par-dessus au moins un élément de connexion (9) y correspondant sur la surface extérieure du manchon (2) et encliqueté derrière ce dernier.

3. Presse-étoupe selon la revendication 2, **caractérisé en ce que** le manchon (2) présente des ergots (9) en saillie radiale, distribués sur sa circonférence, et qu'une saillie (8) circulaire correspondante est prévue sur le côté intérieur de l'enveloppe (7), laquelle peut être glissée, en comprimant le manchon (2) et la lunette (6) et sous déformation élastique de l'enveloppe (7), par-dessus les ergots (9) et encliquetée derrière ces derniers.

4. Presse-étoupe selon la revendication 3, **caractérisé en ce que** les ergots (9) sont régulièrement distribués sur la circonférence du manchon (2) et qu'un pourtour (13) du manchon qui passe par les pointes des ergots présente la forme d'un polygone régulier convexe aux angles arrondis.

5. Presse-étoupe selon la revendication 4, **caractérisé en ce que** la longueur du pourtour (13) n'est pas plus grande que la circonférence intérieure de la saillie (8) sur la surface intérieure de l'enveloppe (7) et préférablement égale à cette circonférence intérieure.

6. Presse-étoupe selon l'une des revendications 4 ou 5, **caractérisé en ce que** le polygone est biangulaire et que le pourtour (13) présente préférablement la forme d'une ellipse.

7. Presse-étoupe selon l'une des revendications 4 ou 5, **caractérisé en ce que** le polygone est triangulaire et que le pourtour (13') présente préférablement la forme d'un triangle de Reuleaux aux angles arrondis.

8. Presse-étoupe selon l'une des revendications 1 à 7, **caractérisé en ce que** la bague d'étanchéité présente une première partie insérable dans le manchon (2), suivie d'une deuxième partie venant s'appuyer dans l'état monté sur une surface frontale extérieure (15) du manchon (2).

9. Presse-étoupe selon l'une des revendications 1 à 8, **caractérisé en ce que** la lunette (6) présente une surface de serrage (16) conique qui, dans l'état monté, presse la bague d'étanchéité (5) radialement vers l'intérieur.

10. Capteur encapsulé, plus particulièrement un détecteur de proximité inductif, comprenant un boîtier tubulaire dont l'une des parties extrêmes forme le manchon (2) d'un presse-étoupe selon l'une des revendications 1 à 9 par lequel un câble de raccordement (3) est guidé dans le boîtier.

11. Capteur encapsulé selon la revendication 10, **caractérisé en ce que** le boîtier comprend une première douille (20) fermée d'un côté et pourvue d'un filetage extérieur pour le montage du capteur, ainsi qu'une deuxième douille (21) correspondante dont l'une des parties extrêmes est insérée de manière étanche dans l'extrémité ouverte de la première douille (20) et dont l'autre partie extrême forme le manchon (2) du presse-étoupe, le diamètre extérieur maximum de ce presse-étoupe étant inférieur au diamètre extérieur et préférablement inférieur au diamètre de fond de filet du filetage extérieur de la première douille (20), de sorte que le capteur est insérable dans un trou de montage avec le câble (3) à l'avant.
